# EUROPÄISCHE PATENTSCHRIFT

(11) **EP 2 829 384 B1**
(45) Veröffentlichungstag und Bekanntmachung des Hinweises auf die Patenterteilung: **06.12.2017**
(21) Anmeldenummer: 14177507.2
(22) Anmeldetag: 17.07.2014
(51) Int. Cl.: B29C 65/40, B29C 47/00

(54) **Handschweißgerät zum Verschweißen von Werkstücken aus thermoplastischem Kunststoff**
Handheld welding device for welding thermoplastic workpieces
Appareil de soudage manuel destiné au soudage de pièces en matière synthétique thermoplastique

(30) Priorität: 26.07.2013 DE 202013103383 U
(43) Veröffentlichungstag der Anmeldung: 28.01.2015
(73) Patentinhaber: Wegener International GmbH, 52249 Eschweiler (DE)
(72) Erfinder: Dietrich, Michael, 52224 Stollberg (DE)
(74) Vertreter: Albrecht, Ralf

(56) Entgegenhaltungen:
- WO-A1-2010/079140
- WO-A1-2010/112403
- DE-A1- 2 832 146
- DE-A1- 3 131 695
- DE-U1- 8 908 194
- US-A- 4 061 519

## Beschreibung

Die Erfindung betrifft ein Handschweißgerät zum Verschweißen von Werkstücken aus thermoplastischem Kunststoff mit einer Heizeinrichtung zur Plastifizierung von Schweißmaterial aus thermoplastischem Kunststoff, einer Zuführeinrichtung zur Zuführung des Schweißmaterials zu der Heizeinrichtung und mit einer Ausstoßeinrichtung zum Ausstoßen des in der Heizeinrichtung plastifizierten Schweißmaterials im Bereich eines Schweißschuhs, wobei eine Heißlufteinrichtung vorgesehen ist, die einen Heißluftauslass neben dem Schweißschuh aufweist.

Zum Verschweißen von Werkstücken aus thermoplastischem Kunststoff, insbesondere von Kunststoffplatten sind Handschweißgeräte bekannt, die typischerweise als Extruderschweißgeräte mit einem äußeren Erscheinungsbild, das dem einer Handbohrmaschine ähnelt, ausgebildet sind. Bei solchen Extruderschweißgeräten wird Schweißmaterial aus thermoplastischem Kunststoff in Form eines Drahtes über eine Zuführeinrichtung eingezogen und nach Granulierung einem Durchgangskanal zugeführt, der mit einer Heizeinrichtung versehen ist, mittels der das Schweißmittelgranulat aufgeschmolzen wird. Der Durchgangskanal ist von einer Extruderschnecke durchsetzt, die mit einem Antriebsmotor verbunden ist und im Betrieb das Schweißmittel durch die Heizeinrichtung bis zu einem Schweißschuh am Ende des Durchgangskanals fördert, über den das plastifizierte Schweißmittel austritt. Antriebsmotor und Extruderschnecke bilden folglich eine Ausstoßeinrichtung.

Handschweißgeräte der vorbeschriebenen Art sind beispielsweise der EP 1 634 688 B1, EP 1 637 234 B1, EP 1 083 037 B1 und DE 10 2009 015 253 A1 zu entnehmen.

Eine besondere Form von Extruderschweißgerät ist in der DE 20 2010 007 466 U1 beschrieben. Bei diesem Handschweißgerät sind nebeneinander zwei Durchgangskanäle vorgesehen, denen Schweißmittel zugeführt wird und in denen es aufgeschmolzen wird. Erst im Bereich des Schweißschuhs werden dann die beiden plastifizierten Schweißmittelströme miteinander vermischt.

Daneben sind auch einfache Handschweißgeräte bekannt, bei denen auf eine Förderschnecke verzichtet wird (vgl. DE 298 18 757 U1).

Die in den vorzitierten Dokumenten offenbarten Handschweißgeräte haben in der Regel zusätzlich eine Heißlufteinrichtung mit einem Heißluftauslass, über den Heißluft in den Nahtbereich der zu verbindenden Werkstücke zwecks deren Vorwärmung geführt werden kann. Im einfachsten Fall besteht die Heißlufteinrichtung aus einem Luftrohr zur Führung der Heißluft, an dem ein externes Heißluftgerät angeschlossen werden kann (DE 38 35 250 C1). Die anderen Handschweißgeräte haben Heißlufteinrichtungen mit einem Heißluftgebläse und einer in dem Luftrohr angeordneten Heizung, mittels der die durch das Gebläse angesaugte Luft erhitzt werden kann (WO 2010/112403 A1; WO 2010/079140 A1; DE 3131695 A1). Der Heißluftauslass ist dabei immer so angeordnet, dass beim Führen des Handschweißgeräts längs des Schweißnahtbereichs der Heißluftauslass vor dem Schweißschuh liegt, so dass der Schweißnahtbereich mittels der Heißluft zunächst vorgewärmt und dann das plastifizierte Schweißmaterial auf den vorgewärmten Bereich aufgetragen wird.

Im Stand der Technik ist es des Weiteren bekannt, die Temperatur des Schweißmaterials mit Hilfe eines Temperatursensors zu erfassen und zur Regelung der Heizeinrichtung die der Plastifizierung des Schweißmaterials dient, zu verwenden (DE 20 54 616 C2; DE 40 37 020 C2; DE 297 18 972 U1). Bei dem Handschweißgerät nach der DE 42 36 281 C2 und nach der DE 89 08 194 U1 wird nicht nur die Temperatur des Schweißmaterials auf eine bestimmte Temperatur geregelt, sondern auch die der in der Heißlufteinrichtung erzeugten Heißluft, wobei die jeweiligen Solltemperaturen einstellbar sind. Bei dem Handschweißgerät gemäß der DE 20 2007 014 871 U1 ist zusätzlich ein Temperatursensor zur Erfassung der Umgebungstemperatur vorgesehen.

In der DE 28 32 146 A1 ist eine Vorrichtung zum Zusammenschweißen von thermoplastischen Folien offenbart, wobei die Vorrichtung einen Temperatursensor zum Messen der Temperatur der Folien aufweist, die in Bewegungsrichtung vor der Erhitzungseinrichtung angeordnet ist und deshalb die Ausgangstemperatur der Folien vor deren Erhitzung misst. Eine entsprechende Vorrichtung ist der US 4 061 519 A zu entnehmen. Auch hier misst der Temperatursensor die Ausgangstemperatur der Folien vor deren Erhitzung.

Für die Ausbildung einer qualitativ hochwertigen Schweißnaht ist es erforderlich, dass die Werkstücke vor dem Auftragen des plastifizierten Schweißmaterials derart vorgewärmt werden, also auf eine solche Temperatur gebracht werden, dass es beim Auftragen des Schweißmaterials zu einer stoffschlüssigen Verbindung mit dem aufgeweichten Material der Werkstücke kommt. Durch eine Temperaturregelung der Heißluft kann dieses Ziel nur unvollkommen erreicht werden, denn auch mit einer solchen Temperaturregelung schwankt die Temperatur der austretenden Heißluft nicht unerheblich. Wesentlich ist aber auch, dass die Vorwärmung in erheblichem Umfang von der Geschwindigkeit abhängt, mit der der Schweißschuh des Handschweißgerätes und damit auch der Heißluftauslass über den Schweißnahtbereich geführt wird. Die Qualität der Schweißnaht ist also abhängig von der Fertigkeit der jeweiligen Bedienungsperson, das Handschweißgerät möglichst gleichmäßig und auch mit nicht zu hoher Geschwindigkeit längs des Schweißnahtbereiches zu bewegen.

Der Erfindung liegt die Aufgabe zugrunde, ein Handschweißgerät der eingangs genannten Art so zu gestalten, dass eine bessere Schweißqualität erzielbar ist.

Diese Aufgabe wird erfindungsgemäß dadurch gelöst, dass ein Temperatursensor zur Erfassung der Temperatur des bzw. der Werkstücke beim Schweißvorgang im Bereich zwischen Schweißschuh und Heißluftauslass vorgesehen ist, der mit einer Auswerteeinrichtung verbunden ist. Grundgedanke der Erfindung ist es, die Temperatur der zu verbindenden Werkstücke im Schweißnahtbereich nach deren Vorwärmung unmittelbar zu erfassen, um sie dann in einer Auswerteeinrichtung als Ist-Größe zu verwerten. Damit sind die Voraussetzungen geschaffen, das Schweißgerät so zu behandeln und/oder zu steuern, dass die Werkstücke im Bereich der Schweißnaht vor dem Auftrag des plastifizierten Schweißmaterials ausreichend vorgewärmt sind, um eine qualitativ hochwertige Schweißnaht zu erhalten, d.h. ein Verschmelzen des Materials der Werkstücke mit dem Schweißmaterial herzustellen.

In Ausbildung der Erfindung ist vorgesehen, dass der Temperatursensor berührungslos arbeitend ausgebildet ist. Dies kann beispielsweise mittels eines Infrarot-Temperatursensors geschehen, der auf den Bereich zwischen Schweißschuh und Heißluftauslass fokussiert ist und somit die dort an dem vorgewärmten Schweißnahtbereich herrschende Temperatur erfasst.

Die vom Temperatursensor kommenden Signale können in der Auswerteeinrichtung auf unterschiedliche Weise aufgearbeitet werden. So kann zu der Auswerteeinrichtung eine Temperaturanzeigeeinrichtung gehören, die der Bedienungsperson eine Information über die von dem Temperatursensor erfasste Temperatur gibt, so dass er die Geschwindigkeit der Bewegung des Handschweißgerätes längs der Schweißnaht dergestalt anpassen kann, dass er die Geschwindigkeit umso höher wählt, je höher die von dem Temperatursensor erfasste Vorwärmtemperatur ist, und umgekehrt. Die Anzeigeeinrichtung kann sich darauf beschränken, dass die Temperatur lediglich qualitativ angezeigt wird. Mehr Information erhält die Bedienungsperson, wenn sie die tatsächliche Temperatur analog oder digital anzeigt.

Stattdessen oder in Kombination mit der Anzeigeeinrichtung kann zu der Auswerteeinrichtung auch eine optische und/oder akustische Signaleinrichtung gehören, die von der Auswerteeinrichtung bei Unterschreiten eines Temperaturschwellwertes aktiviert wird. Bei einer optischen Signaleinrichtung kann dies beispielsweise dadurch geschehen, dass eine Signalleuchte aufleuchtet, wenn die erfasste Vorwärmtemperatur zu gering ist. Dies kann eine rote Signalleuchte sein, die auch zwecks Verbesserung des Aufmerksamkeitsgrades blinkend ausgebildet sein kann. Selbstverständlich besteht auch die Möglichkeit, dies umgekehrt dergestalt vorzusehen, dass nur bei ausreichender Vorwärmtemperatur ein optisches Signal, beispielsweise ein grünes Signal, aufleuchtet. Soweit die Signaleinrichtung akustischer Art ist, kann ein Warnton erzeugt werden, wenn die erfasste Vorwärmtemperatur zu gering ist. Die Bedienungsperson kann dann die Bewegung des Handschweißgerätes so anpassen, d.h. reduzieren, dass sich wieder eine ausreichende Vorwärmtemperatur einstellt.

Alternativ dazu, aber auch in Kombination mit den vorgenannten Einrichtungen kann die Auswerteeinrichtung mit der Heißlufteinrichtung verbunden ist und derart auf sie einwirkt, dass die Temperatur der Heißluft erhöht wird, wenn die von dem Temperatursensor erfasste Temperatur einen Temperaturschwellwert unterschreitet. Stellt also die Auswerteeinrichtung fest, dass der Temperatursensor eine für die Vorwärmung des Schweißnahtbereiches unzureichende Temperatur erfasst, wird automatisch die Heißlufteinrichtung derart angesteuert, dass die ausströmende Heißluft eine höhere Temperatur erhält. Alternativ dazu kann vorgesehen sein, dass die Auswerteeinrichtung derart auf die Heizeinrichtung einwirkt, dass die Temperatur der Heißluft umso höher ist, je geringer die von dem Temperatursensor erfasste Temperatur ist. In diesem Fall besteht also ein gleitender Zusammenhang zwischen der erfassten Vorwärmtemperatur und der Temperatur der Heißluft.

Die Einwirkung der Auswerteeinrichtung auf die Heißlufteinrichtung kann auch so gestaltet werden, dass die Ausströmgeschwindigkeit der Heißluft erhöht wird, wenn die von dem Temperatursensor erfasste Temperatur einen Temperaturschwellwert unterschreitet. Auch dies führt zu einer erhöhten Wärmezufuhr in den Schweißnahtbereich. Alternativ dazu kann vorgesehen sein, dass die Auswerteeinrichtung derart auf die Heißlufteinrichtung einwirkt, dass die Ausströmgewindigkeit der Heißluft umso höher ist, je geringer die von dem Temperatursensor erfasste Temperatur ist. Es versteht sich, dass die Einwirkung auf die Temperatur der Heißluft mit der Einwirkung auf die Ausströmgeschwindigkeit der Heißluft auch miteinander kombiniert werden können.

Die Anordnung des Temperatursensors ist nicht kritisch, solange der Temperatursensor derart fokussiert ist, dass er zuverlässig die Vorwärmtemperatur im Schweißnahtbereich erfasst, also diejenige Temperatur, die durch den Heißluftstrahl erzeugt worden ist. Zweckmäßigerweise ist der Temperatursensor zwischen Heißluftauslass und Schweißschuh angeordnet.

Es versteht sich, dass die erfindungsgemäße Ausbildung des Handschweißgerätes sich insbesondere für solche eignet, die als Extrudierschweißgeräte ausgebildet sind, bei denen die Ausstoßeinrichtung als in einem Ausstoßkanal angeordnete Förderschnecke ausgebildet ist. Dabei können auch mehrere solcher Einrichtungen vorgesehen sein, wie dies bei dem Handschweißgerät gemäß der DE 20 2010 007 466 U1 der Fall ist.

In der Zeichnung ist die Erfindung anhand eines Ausführungsbeispiels näher veranschaulicht. Es zeigen:
- Figur 1: eine Seitenansicht des unteren Teils eines Handschweißgerätes mit zu verbindenden Werkstücken, und
- Figur 2: den unteren Teil des Handschweißgerätes gemäß Figur 1 in der vorderseitigen Ansicht.

Das in den Figuren dargestellte Handschweißgerät 1 ist als Extrudierschweißgerät ausgebildet und entspricht in seinem grundsätzlichen Aufbau den Extrudierschweißgeräten, wie sie in den oben zitierten Dokumenten zum Stand der Technik im Einzelnen dargestellt sind. Auf deren Inhalt wird zwecks Erläuterung des hier beschriebenen Handschweißgerätes 1 ausdrücklich Bezug genommen.

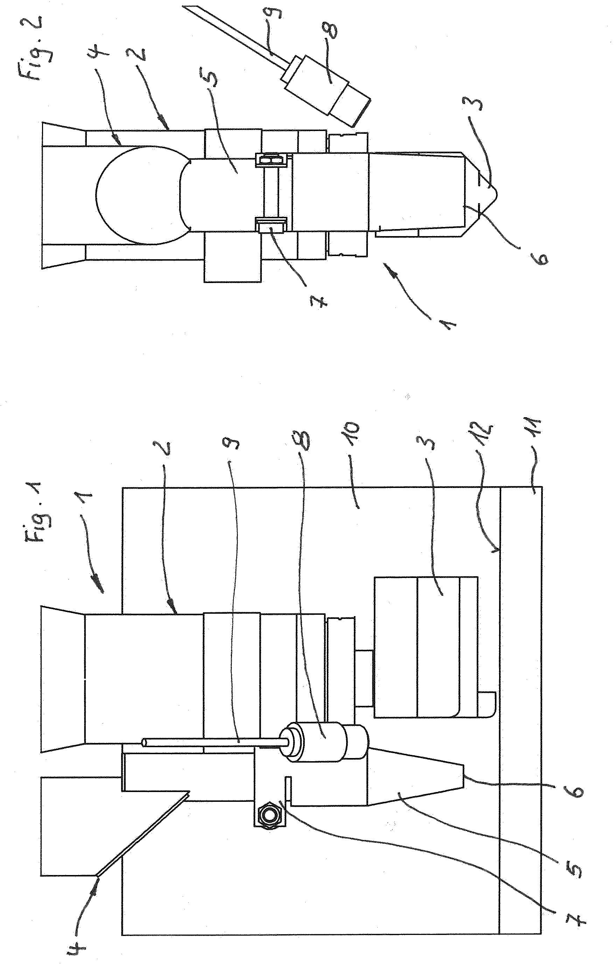

Von dem Handschweißgerät 1 ist hier nur der Endbereich mit einer rohrförmigen Heizeinrichtung 2 dargestellt, die von einem Durchgangskanal durchsetzt ist, welcher sich in den Darstellungen der Figuren 1 und 2 in senkrechter Richtung erstreckt. Die Heizeinrichtung 2 ist von einem Heizmantel 3 umgeben, der mit Heizstäben durchsetzt ist, die als elektrische Widerstandsheizelemente ausgebildet sind. In dem Durchgangskanal ist eine Förderschnecke angeordnet, die in dem hier nicht dargestellten Bereichs mittels eines elektrischen Antriebsmotors in Drehung versetzbar ist. Die Förderschnecke dient dazu, das zunächst granulierte Schweißmaterial über den Durchgangskanal in die Heizeinrichtung 2 zu fördern, wo das Schweißmaterial plastifiziert wird. Der Durchgangskanal setzt sich in einem Schweißschuh 3 fort, der an seinem unteren Ende eine hier nicht näher dargestellte Ausstoßöffnung aufweist. Über diese Ausstoßöffnung wird das plastifizierte Schweißmaterial ausgestoßen.

Parallel zu der Heizeinrichtung 2 erstreckt sich eine Heißlufteinrichtung 4, von der hier nur der letzte Teil eines Heißluftrohrs 5 zu sehen ist. In dem nicht dargestellten Teil der Heißlufteinrichtung 4 befindet sich ein Gebläse, über das Umgebungsluft angesaugt und über Heizdrähte auf eine bestimmte Temperatur erhitzt wird. Diese Heißluft tritt dann über einen Heißluftauslass 6 neben dem Schweißschuh 3 aus. Das Heißluftrohr 5 ist über eine Schelle 7 mit der Heizeinrichtung 2 verbunden.

Wie insbesondere der Figur 1 zu entnehmen ist, ist zwischen Heißluftauslass 6 und Schweißschuh 3 ein Temperatursensor 8 angeordnet, der - wie aus Figur 2 zu ersehen ist - schräg in Richtung auf den Zwischenraum zwischen Schweißschuh 3 und Heißluftauslass 6 gerichtet ist. Er ist über hier nicht dargestellte Mittel mit dem Handschweißgerät 1 verbunden. Eine Signalleitung 9 führt zu einer hier nicht näher dargestellten Auswerteeinrichtung, die Teil des Handschweißgerätes 1 ist.

In der Darstellung gemäß Figur 1 ist das Handschweißgerät 1 zwei Kunststoffplatten 10, 11 zugeordnet, wobei die eine Kunststoffplatte 10 senkrecht ausgerichtet ist und die andere Kunststoffplatte 11 sich waagerecht erstreckt, also im rechten Winkel zu der Kunststoffplatte 10. Dabei steht die senkrechte Kunststoffplatte 10 mit ihrer unteren Stirnseite auf der waagerechten Kunststoffplatte 11 auf, so dass ein rechtwinkliger Schweißnahtbereich 12 ausgebildet wird. In Figur 1 ist das Handschweißgerät 1 so dargestellt, dass der Schweißschuh 3 in den Schweißnahtbereich 12 hineinreicht.

Im Betrieb wird das Handschweißgerät 1 in der Darstellung gemäß Figur 1 nach links bewegt. Dabei strömt aus dem Heißluftauslass 6 Heißluft mit einer solchen Temperatur aus, dass der Schweißnahtbereich 12 vorgewärmt wird, d.h. im Wesentlichen oberflächlich plastifiziert wird. Dies wird bei weiterer Bewegung des Handschweißgerätes 1 von dem Temperatursensor 8 erfasst.

Gleichzeitig strömt aus dem Schweißschuh 3 plastifiziertes Schweißmaterial auf den vorgewärmten Schweißnahtbereich 12. Das Schweißmaterial verbindet sich mit dem plastifizierten Material der beiden Kunststoffplatten 10, 11 im Schweißnahtbereich 12 und sorgt nach Abkühlung für eine feste Verbindung der beiden Kunststoffplatten 10, 11.

Die von dem Temperatursensor 8 erfasste Wärmestrahlung korreliert mit der Temperatur der Kunststoffplatten 10, 11 im Schweißnahtbereich 12 und kann als Ist-Wert in der Auswerteeinrichtung verarbeitet werden, beispielsweise um die Temperatur in Kelvin oder Celsius anzuzeigen und/oder eine optische und/oder akustische Signalgabe zu erzeugen, anhand der die Bedienungsperson sehen kann, ob die Geschwindigkeit der Vorwärtsbewegung des Handschweißgerätes 1 längs des Schweißnahtbereichs 12 zu groß ist und demgemäß die Vorwärmung durch der aus dem Heißluftauslass 6 austretenden Heißluft ausreichend ist oder nicht. Im letzteren Fall weiß er, dass er das Handschweißgerät 1 zu schnell bewegt und wird deshalb die Geschwindigkeit so reduzieren, bis der Temperatursensor 8 wieder eine Vorwärmtemperatur erfasst, die für eine gute Schweißnaht ausreichend ist.

Wie schon oben erwähnt, können die von dem Temperatursensor 8 erzeugten und über die Signalleuchten 9 an die Auswerteeinrichtung gegebenen Signale auch dazu verwendet werden, die Heizleistung der Heißlufteinrichtung 4 in der Weise anzupassen, dass die Heizleistung umso höher eingestellt wird, je geringer die erfasste Temperatur des Schweißnahtbereiches 12 ist.

## Patentansprüche

1. Handschweißgerät (1) zum Verschweißen von Werkstücken (10, 11) aus thermoplastischem Kunststoff, mit einer Heizeinrichtung (2) zur Plastifizierung von Schweißmaterial aus thermoplastischem Kunststoff, einer Zuführeinrichtung zur Zuführung des Schweißmaterials zu der Heizeinrichtung (2) und mit einer Ausstoßeinrichtung zum Ausstoßen des in der Heizeinrichtung (2) plastifizierten Schweißmaterials im Bereich eines Schweißschuhs (3), wobei eine Heißlufteinrichtung (4) vorgesehen ist, die einen Heißluftauslass (6) neben dem Schweißschuh (3) aufweist, **dadurch gekennzeichnet, dass** ein Temperatursensor (8) zur Erfassung der Temperatur der Werkstücke (10, 11) beim Schweißvorgang im Bereich zwischen Schweißschuh (3) und Heißluftauslass (6) vorgesehen ist, der mit einer Auswerteeinrichtung verbunden ist.

2. Handschweißgerät nach Anspruch 1, **dadurch gekennzeichnet, dass** der Temperatursensor (8) berührungslos arbeitend ausgebildet ist.

3. Handschweißgerät nach Anspruch 2, **dadurch gekennzeichnet, dass** der Temperatursensor (8) als Infrarot-Temperatursensor ausgebildet ist.

4. Handschweißgerät nach einem der Ansprüche 1 bis 3, **dadurch gekennzeichnet, dass** zu der Auswerteeinrichtung eine Temperaturanzeigeeinrichtung gehört, mittels der die gemessene Temperatur zumindest qualitativ, vorteilhafterweise quantitativ anzeigbar ist.

5. Handschweißgerät nach einem der Ansprüche 1 bis 4, **dadurch gekennzeichnet, dass** zu der Auswerteeinrichtung eine optische und/oder akustische Signaleinrichtung gehört, die von der Auswerteeinrichtung bei Unterschreiten eines Temperaturschwellwertes aktiviert wird.

6. Handschweißgerät nach einem der Ansprüche 1 bis 5, **dadurch gekennzeichnet, dass** die Auswerteeinrichtung mit der Heißlufteinrichtung (4) verbunden ist und damit auf sie einwirkt, dass die Temperatur der Heißluft erhöht wird, wenn die von dem Temperatursensor erfasste Temperatur einen Temperaturschwellwert unterschreitet.

7. Handschweißgerät nach einem der Ansprüche 1 bis 5, **dadurch gekennzeichnet, dass** die Auswerteeinrichtung mit der Heißlufteinrichtung (4) verbunden ist und derart auf sie einwirkt, dass die Temperatur der Heißlufteinrichtung (4) umso höher ist, je geringer die von dem Temperatursensor erfasste Temperatur ist.

8. Handschweißgerät nach einem der Ansprüche 1 bis 7, **dadurch gekennzeichnet, dass** die Auswerteeinrichtung mit der Heißlufteinrichtung (4) verbunden ist und derart auf sie einwirkt, dass die Ausströmgeschwindigkeit der Heißluft erhöht wird, wenn die von dem Temperatursensor erfasste Temperatur einen Temperaturschwellwert unterschreitet.

9. Handschweißgerät nach einem der Ansprüche 1 bis 7, **dadurch gekennzeichnet, dass** die Auswerteeinrichtung mit der Heißlufteinrichtung (4) verbunden ist und derart auf sie einwirkt, dass die Ausströmgeschwindigkeit der Heißluft umso höher ist, je geringer die von dem Temperatursensor erfasste Temperatur ist.

10. Handschweißgerät nach einem der Ansprüche 1 bis 9, **dadurch gekennzeichnet, dass** der Temperatursensor (8) zwischen Heißluftauslass (6) und Schweißschuh (3) angeordnet ist.

11. Handschweißgerät nach einem der Ansprüche 1 bis 10, **dadurch gekennzeichnet, dass** das Handschweißgerät (1) als Extruderschweißgerät ausgebildet ist, bei dem die Ausstoßeinrichtung als eine in einem Ausstoßkanal angeordnete Förderschnecke ausgebildet ist und der Ausstoßkanal von der Heizeinrichtung (2) umgeben ist.

## Claims

1. A hand welder (1) for the welding of workpieces (10, 11) made of thermoplastic material, comprising a heating device (2) for the plastification of welding material made of thermoplastic material, a supply device for supplying the welding material to the heating device (2), and comprising an ejection device for ejecting the welding material plasticised in the heating device (2) in the region of a welding shoe (3), a hot air device (4) being provided which has a hot air outlet (6) next to the welding shoe (3), **characterised in that** a temperature sensor (8) is provided for recording the temperature of the workpieces (10, 11) during the welding process in the region between the welding shoe (3) and the hot air outlet (6) which is connected to an evaluation device.

2. The hand welder according to Claim 1, **characterised in that** the temperature sensor (8) is designed to work contactlessly.

3. The hand welder according to Claim 2, **characterised in that** the temperature sensor (8) is in the form of an infrared temperature sensor.

4. The hand welder according to any of Claims 1 to 3, **characterised in that** the evaluation device includes a temperature display device by means of which the measured temperature can be displayed at least qualitatively, advantageously quantitatively.

5. The hand welder according to any of Claims 1 to 4, **characterised in that** the evaluation device includes an optical and/or acoustic signal device which is activated by the evaluation device upon falling below a temperature threshold.

6. The hand welder according to any of Claims 1 to 5, **characterised in that** the evaluation device is connected to the hot air device (4) and so acts on it such that the temperature of the hot air is increased when the temperature recorded by the temperature sensor falls below a temperature threshold.

7. The hand welder according to any of Claims 1 to 5, **characterised in that** the evaluation device is connected to the hot air device (4) and acts on it such that the temperature of the hot air device (4) becomes higher the lower the temperature recorded by the temperature sensor is.

8. The hand welder according to any of Claims 1 to 7, **characterised in that** the evaluation device is connected to the hot air device (4) and acts on it such that the outflow speed of the hot air is increased when the temperature recorded by the temperature sensor falls below a temperature threshold.

9. The hand welder according to any of Claims 1 to 7, **characterised in that** the evaluation device is connected to the hot air device (4) and acts on it such that the outflow speed of the hot air becomes higher the lower the temperature recorded by the temperature sensor is.

10. The hand welder according to any of Claims 1 to 9, **characterised in that** the temperature sensor (8) is disposed between the hot air outlet (6) and the welding shoe (3).

11. The hand welder according to any of Claims 1 to 10, **characterised in that** the hand welder (1) is in the form of an extrusion welder in which the ejection device is in the form of a screw conveyor disposed in an ejection channel, and the ejection channel is surrounded by the heating device (2).

## Revendications

1. Appareil de soudage manuel (1) destiné au soudage de pièces à usiner (10, 11) d'une matière thermoplastique, comprenant un dispositif de chauffage (2) pour la plastification de la matière de soudage en matière thermoplastique, un dispositif d'alimentation pour l'amenée de la matière de soudage vers le dispositif de chauffage (2) et comprenant un dispositif d'éjection destiné à éjecter la matière de soudage plastifiée dans le dispositif de chauffage (2) au niveau d'une buse de soudage (3), un dispositif à air chaud (4) étant prévu, **caractérisé en ce qu'**un capteur de température (8) destiné à capter la température des pièces à usiner (10, 11) lors de l'opération de soudage est prévu dans la zone située entre la buse de soudage (3) et la sortie d'air chaud (6), lequel est relié à un dispositif d'évaluation.

2. Appareil de soudage manuel selon la revendication 1, **caractérisé en ce que** le capteur de température (8) est conçu de manière à travailler sans contact.

3. Appareil de soudage manuel selon la revendication 2, **caractérisé en ce que** le capteur de température (8) est conçu comme capteur de température à infrarouge.

4. Appareil de soudage manuel selon l'une quelconque des revendications 1 à 3, **caractérisé en ce qu'**un dispositif d'affichage de température fait partie du dispositif d'évaluation, au moyen duquel la température mesurée peut être affichée au moins de manière qualitative, de préférence de manière quantitative.

5. Appareil de soudage manuel selon l'une quelconque des revendications 1 à 4, **caractérisé en ce qu'**un dispositif de signalisation visuelle et/ou acoustique fait partie du dispositif d'évaluation, lequel est activé par le dispositif d'évaluation lors d'un dépassement vers le bas d'une valeur seuil de température.

6. Appareil de soudage manuel selon l'une quelconque des revendications 1 à 5, **caractérisé en ce que** le dispositif d'évaluation est relié au dispositif à air chaud (4) et influence ainsi celui-ci de sorte que la température de l'air chaud est augmentée lorsque la température captée par le capteur de température dépasse vers le bas une valeur seuil de température.

7. Appareil de soudage manuel selon l'une quelconque des revendications 1 à 5, **caractérisé en ce que** le dispositif d'évaluation est relié au dispositif à air chaud (4) et influence celui-ci de sorte que la température du dispositif à air chaud (4) est d'autant plus élevée plus la température captée par le capteur de température est moindre.

8. Appareil de soudage manuel selon l'une quelconque des revendications 1 à 7, **caractérisé en ce que** le dispositif d'évaluation est relié au dispositif à air chaud (4) et influence celui-ci de sorte que la vitesse d'écoulement de l'air chaud est augmentée lorsque la température captée par le capteur de température dépasse vers le bas une valeur seuil de température.

9. Appareil de soudage manuel selon l'une quelconque des revendications 1 à 7, **caractérisé en ce que** le dispositif d'évaluation est relié au dispositif à air chaud (4) et influence celui-ci de sorte que la vitesse d'écoulement de l'air chaud est d'autant plus élevée plus la température captée par le capteur de température est moindre.

10. Appareil de soudage manuel selon l'une quelconque des revendications 1 à 9, **caractérisé en ce que** le capteur de température (8) est disposé entre la sortie d'air chaud (6) et la buse de soudage (3).

11. Appareil de soudage manuel selon l'une quelconque des revendications 1 à 10, **caractérisé en ce que** l'appareil de soudage manuel (1) est conçu comme appareil de soudage par extrusion, dans lequel le dispositif d'éjection est réalisé en tant qu'une vis de transport disposée dans un canal d'éjection et dans lequel le canal d'éjection est entouré par le dispositif de chauffage (2).
